# EUROPEAN PATENT SPECIFICATION

(11) **EP 3 147 618 B1**
(45) Date of publication and mention of the grant of the patent: **17.04.2019**
(21) Application number: 14892196.8
(22) Date of filing: 14.05.2014
(51) Int. Cl.: F28D 20/02, F28D 20/00

(54) **HEAT ENERGY ACCUMULATOR BASED ON SOLID-LIQUID PHASE-CHANGE MATERIALS, AND METHOD FOR PRODUCING THE UNIT**
WÄRMEENERGIEAKKUMULATOR AUF BASIS VON FEST-FLÜSSIG-PHASENWECHSEL-MATERIALIEN UND VERFAHREN ZUR HERSTELLUNG DER EINHEIT
ACCUMULATEUR D'ÉNERGIE THERMIQUE À BASE DE MATÉRIAUX À CHANGEMENT DE PHASE SOLIDE-LIQUIDE ET PROCÉDÉ DE FABRICATION DE L'UNITÉ

(43) Date of publication of application: 29.03.2017
(73) Proprietor: Universitat Politècnica De Catalunya, 08034 Barcelona (ES)
(72) Inventor: OLIVA LLENA, Asensio, E-08034 Barcelona (ES); PÉREZ SEGARRA, Carlos David, E-08034 Barcelona (ES); RIGOLA SERRANO, Joaquim, E-08034 Barcelona (ES); CASTRO GONZÁLEZ, Jesús, E-08034 Barcelona (ES); OLIET CASASAYAS, Carles, E-08034 Barcelona (ES); RODRÍGUEZ PÉREZ, Ivette, E-08034 Barcelona (ES); LEHMKUHL BARBA, Oriol, E-08034 Barcelona (ES); TRIAS MIQUEL, Xavi, E-08034 Barcelona (ES); CAPDEVILA PARAMIO, Roser, E-08034 Barcelona (ES); ALBA QUEIPO, Ramiro, E-08034 Barcelona (ES); ORDOÑO MARTÍNEZ, Manuel Miguel, E-08034 Barcelona (ES); MORALES RUIZ, Sergio, E-08034 Barcelona (ES)
(74) Representative: Juncosa Miró, Jaime
(86) International application number: PCT/ES2014/070400
(87) International publication number: WO 2015/173441

(56) References cited:
- EP-A2- 0 271 118
- WO-A1-2012/142933
- WO-A1-2013/019113
- WO-A2-2009/105643
- DE-A1-102012 000 225
- DE-A1-102012 000 225
- GB-A- 2 280 746
- JP-A- S58 140 594
- JP-A- S58 140 595
- US-B2- 7 222 659

## Description

### Object of the invention

The present invention relates to the design of a thermal energy storage unit using solid-liquid phase-change materials, to be utilized in any applications wherein accumulation of thermal energy with high energy density is required.

### State of the art

In complex systems where processes needing to dissipate thermal energy and other processes that, conversely, need thermal energy inputs coexist, it is possible to take advantage of this circumstance in order to improve the energy efficiency of the whole, by taking advantage of these residual energies. In most cases, however, the moment in which the process carries out the dissipation of thermal energy does not coincide with the moment in which the other process needs that energy. A storage element for storage of that thermal energy becomes necessary in order to uncouple the moments when that surplus energy exists from the moments when that need of energy exists.

It is convenient that the thermal energy storage element should be as compact as possible in order to save space, especially in applications where this is a key factor (aerospace industry, automotive industry, household appliances, etc.). It is also of great interest to save on manufacturing costs. In these types of applications, it is of great interest to use solid-liquid phase-change materials, PCM. These types of materials can store thermal energy with high energy density in a well-defined temperature range wherein the solid-liquid phase change occurs. In addition, the density change between the solid and liquid phases is small, so that the development of storage devices at industrial scale, as opposed to materials that perform the phase change from liquid or solid to vapor, becomes feasible.

Thus, a thermal energy storage unit of this type comprises essentially a casing wherein both the material that performs the solid-liquid phase change and at least one circuit along which a heat carrier fluid flows that will facilitate the thermal energy exchange with other system elements and/or processes are housed.

A thermal energy storage unit design with solid-liquid phase-change materials is disclosed in document US4609036, titled "Bulk heat or cold storage device for thermal energy storage compounds." This storage device consists of a parallelepipedal casing wherein the circuit of the heat carrier fluid, which consists of a bundle of tubes that form a coil, is accommodated.

One further thermal energy storage unit with solid-liquid phase-change materials is described in documents EP1195571A2 and US6889751, titled "Latent heat storage device." In this case, the heat carrier fluid flows through a bundle of tubes between which the material performing the solid phase change is located.

A third thermal energy storage unit configuration is described in document EP1431694A1, titled "Heat accumulation unit and method of manufacturing the unit." The geometry of this storage device is cylindrical, and the heat carrier fluid flows spirally through a coil. Special emphasis is placed on the density changes of the material that performs the phase change. In this case the manufacturing method is also described.

One further energy storage configuration is described in documents US7859845 and US2010/0157525, titled "Phase change material cooling system." In this case, the proposed geometry is that of a plate exchanger. The heat carrier fluid flows through a channel circuit, whereas the material performing the phase change is housed in the other circuit. This way, the heat carrier fluid is distributed among the various circuit channels.

Document US79802938, titled "Two fluid thermal storage device to allow for independent heating and cooling" discloses a storage device with a "plate fin" geometry. In this case, it has two circuits through which two independent heat carrier fluids flow to supply or extract energy.

In documents US2009/034680 and WO2009/105643 A2, titled "Heat storage device," an energy storage unit is described based on a casing that accommodates an arrangement of plates therein having phase-change material in their interior, a heat carrier fluid flowing through the gap between the plates, which branches off as it enters the casing. In this document a way of encapsulating the phase-change material between two sheets forming a plate is described. The document WO2009/105643 A2 describes a thermal energy storage unit according to the preamble of claim 1.

One further thermal energy storage unit configuration is presented in document WO 2012/123738A1, titled "Thermal energy store," which consists of a casing that accommodates coiled tubes therein through which the heat carrier fluid flows, said coil being designed so that there are different rows of tubes, a cartridge filled with a phase-change material being adapted or inserted between each row of tubes, which stores heat.

### Purpose of the invention

The present invention aims at perfecting the design of a compact thermal energy storage unit that uses solid-liquid phase-change materials and with an optimal use of the phase-change material, as well as the design of the circuit through which one single heat carrier fluid flows.

This invention also relates to its manufacturing method, based on equal metallic parts which, suitably arranged, make it possible to accommodate plates filled with a phase-change material that, in turn, make up the heat carrier fluid circuit.

### Description of the invention

The present invention concerns to a thermal energy storage unit that uses a phase-change material as a medium to store and retrieve heat in the form of sensible heat and a phase change. This device is able to store and retrieve an average power of 8kW/L of used PCM. This power was assessed from a case where the difference in temperature (the initial temperature of the fluid transferring heat to the storage device and the initial temperature of the fluid retrieving a part of this heat) is about 15°C. In this case, the elapsed time is approximately 180 seconds.

The thermal energy storage unit object of the present invention comprises a parallelepipedal outer casing, inside which the heat carrier fluid circulates in a single flow without bifurcations. In addition, the solid-liquid phase-change material is encapsulated in preferably metallic flat plates, so that, when suitably arranged, they determine the circuit or path of the heat carrier fluid.

For the plates filled with a phase-change material to form the heat carrier fluid circuit, they are supported on and attached to U-shaped parts, hereinafter holders, which in turn are attached to the casing. These holders are arranged in parallel, but alternately pointing in opposite directions, so that the plate with the phase-change material that is shorter than the holder and the casing leaves a gap through which the heat carrier fluid flows. The parallel and oppositely pointing arrangement of the holders generates a circuit in the shape of a coil with a rectangular section having a large ratio between the section width and height. This causes the input of fluid to be a critical aspect, so that a good system of flow distribution ensures that the storage device will operate optimally and efficiently.

The encapsulation of the phase-change material in the preferably metallic plates of small thickness is not arbitrary, since it guarantees a heat transfer surface to volume ratio of the phase-change material. This is a specially interesting feature, since the low thermal conductivity of the phase-change material, in relatively fast transient processes, causes it to act only in the first millimeters of thickness with respect to the heat exchange surface, so that a lot of material is wasted.

The (solid-liquid) phase-change material may be selected from different types of materials, such as salts, salt mixtures, paraffins, metals and/or metallic alloys, among others. For the selection of the phase-change material (based on the melting and freezing points of the PCM), the operating temperatures and conditions of the energy source -which supplies the heat to be stored- and the energy demand - which eventually receives the retrieved heat- should be taken into account.

The design of the circuit of the heat carrier fluid in one single channel without bifurcations causes the fluid to be preferably liquid, since a vapor or gas would experience an inadvisable pressure drop in the circuit.

Further details and characteristics will become apparent in the course of the description presented below, wherein different examples of the invention are presented, by way of illustration, not of limitation, with the aid of the corresponding Figures.

The following is a list of the various parts of the invention, which are identified in the following Figures with the aid of numbers: (1) thermal energy storage unit; (2) parallelepipedal casing; (3) U-shaped holder; (4) plate filled with a solid-liquid phase-change material; (5) heat carrier fluid circuit; (6) manifold.

### Description of the Figures

Figure 1 is an exploded perspective view of the thermal energy storage unit (1) where it can be seen that the casing (2) consists of two parts, so that the placement and subsequent gluing of the holders (3) and, eventually, the placement of the plates filled with a phase-change material (4) are facilitated.
Figure 2 is, on the left, a side view and, on the right, a detail of the section of the thermal energy storage unit, where the holders (3), the plates filled with a phase-change material (4) and the heat carrier fluid circuit (5) are visible.
Figure 3 is a perspective view of the thermal energy storage unit (1) operating in a horizontal position, together with the manifold (6).
Figure 4 is a view of the thermal energy storage unit (1) in a vertical working position.
Figure 5 is a view of the plate filled with a phase-change material (4), with two different configurations: (7) an undulated plate and/or (8) a finned plate.

### Description of preferred embodiments of the invention

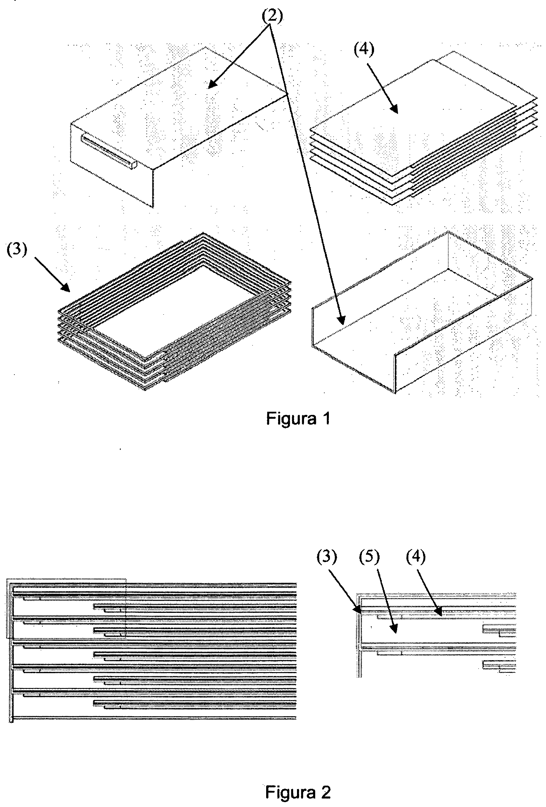

A embodiment of the present invention is set out having a parallelepipedal casing (2) comprising two parts: a top one and a bottom one in the shape of an "L" (see Figure 1). This way, the placement and subsequent gluing of the holders (3) and, eventually, the placement of the plates filled with a phase-change material (4) are facilitated. The holders (3) are built with 3 profiles in the shape of an "L" welded together until the "U" shape is obtained. This holder part (3) allows accommodating the plates filled with the phase-change material (4). Once they are accommodated, the holder (3) is glued to the plate (4). All the holders (3), together with the glued plates (4), constitute equal parts. They are installed arranged in parallel but in opposite, alternatingly reverse, directions (see Figure 2), so that a gap (5) is left wherein the heat carrier fluid flows shaping the coil circuit. In this preferred embodiment, the storage device operates in a horizontal position.

The plates filled with a solid-liquid phase-change material will preferably be metallic and will have a preferably rough surface so as to improve heat transfer.

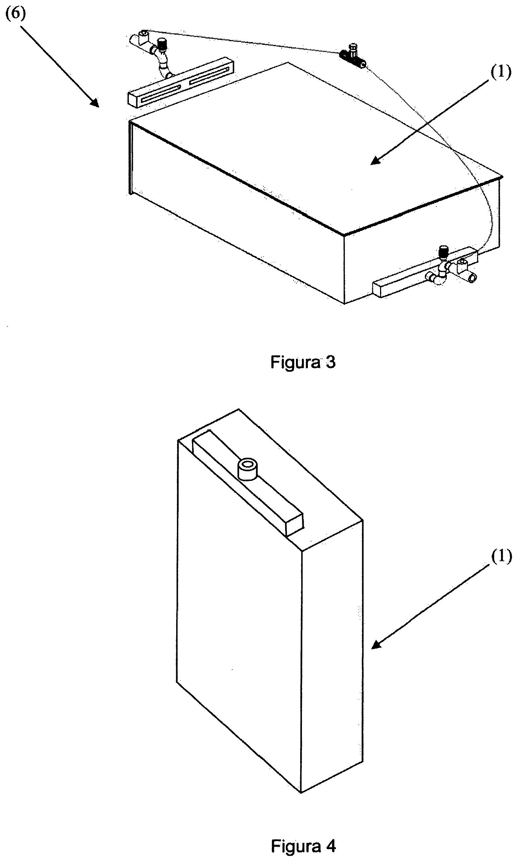

In order to ensure the optimal operation of the storage device, good distribution of the heat carrier fluid throughout the entire circuit section is a key aspect. One preferred embodiment of the input manifold (6) can be seen in Figure 3. It comprises a pre-tank with holes whose diameter is small enough to ensure a fairly even distribution of the flow rate under nominal use conditions.

Another embodiment of the thermal energy storage unit corresponds to arranging the storage device in the vertical position (see Figure 4), in which case there is a greater effect of the force of gravity on the flow that is circulating through the channels formed between the plates.

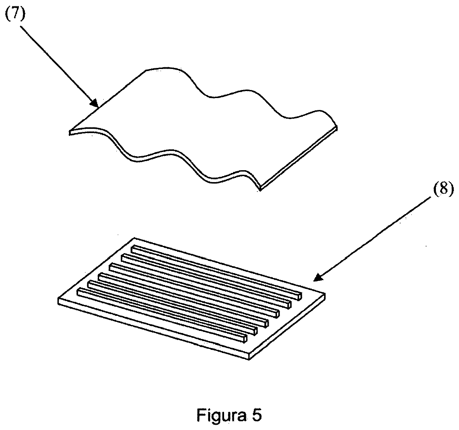

Another embodiment of the thermal energy storage unit corresponds to using undulated plates (7) or finned plates (8), with a phase-change material therein, instead of flat plates (see Figure 5). By means of this preferred embodiment and depending on the operating conditions, it is possible to change the flow rate inside the cannels, which can increase the value of the heat transfer coefficient, in turn increasing the amount of heat transferred.

## Claims

1. A thermal energy storage unit based on solid-liquid phase-change materials, the unit using a solid-liquid phase-change material and at least one preferably liquid heat carrier fluid, for the stored thermal energy to be conveyed and reused in other processes, comprising:
- a parallelepipedal casing (2);
- solid-liquid phase-change material encapsulated in plates, said plates being arranged inside said casing (2) determining a heat carrier fluid circuit (5);
- at least two manifolds (6) connected to the casing (2) which ensure proper distribution of the heat carrier fluid;
**characterized in that**
- a plurality of U-shaped holders (3) are arranged in parallel and attached to the casing, but alternately pointing in opposite directions,
- each plate is supported on and attached to one U-shaped holder (3), and is shorter than the casing (2), leaving a gap through which the heat carrier fluid flows;
- successive plates are misaligned generating said heat carrier fluid circuit (5) in the shape of one coil with no branching.

2. The thermal energy storage unit based on solid-liquid phase-change materials according to claim 1 **characterized in that** the parallelepipedal casing (2) comprises two parts in order to facilitate the installation of holders and the plates filled with a solid-liquid phase-change material.

3. The thermal energy storage unit based on solid-liquid phase-change materials according to claim 1 **characterized in that** the U-shaped holders (3) are built from an "L"-shaped profile.

4. The thermal energy storage unit based on solid-liquid phase-change materials according to claim 1 **characterized in that** the plate filled with a solid-liquid phase-change material (4) is made of a thermal conductive material.

5. The thermal energy storage unit based on solid-liquid phase-change materials according to claim 1 **characterized in that** the space (5) along which the heat carrier fluid flows has a rectangular section.

6. The thermal energy storage unit based on solid-liquid phase-change materials according to claim 1 **characterized in that** the manifold (6) of the heat carrier fluid is shaped as a tank with holes sized to ensure proper distribution.

7. The thermal energy storage unit based on solid-liquid phase-change materials according to claim 1 **characterized in that** the circulation of the heat carrier fluid into the storage device (1) through a circuit (5) that is formed by straight or undulated channels is based on the shape and surface that characterize the plates with encapsulated PCM (4), (7), and (8).

## Patentansprüche

1. Thermische Energiespeichereinheit auf Basis von Fest-Flüssig-Phasenwechsel-Materialien, wobei die Einheit ein Fest-Flüssig-Phasenwechsel-Material und mindestens ein vorzugsweise flüssiges, Wärmeträgerfluid zur Weiterleitung und Wiederverwendung der gespeicherten Wärmeenergie in anderen Prozessen verwendet, umfassend:
- ein quaderförmiges Gehäuse (2);
- in Platten eingeschlossenes Fest-Flüssig-Phasenwechsel-Material, wobei die genannten Platten in dem genannten Gehäuse (2) angeordnet sind und einen Wärmeträgerfluidkreis (5) bilden;
- mindestens zwei mit dem Gehäuse (2) verbundene Verteiler (6), die eine geeignete Verteilung des Wärmeträgerfluids gewährleisten;
**dadurch gekennzeichnet, dass**
- eine Vielzahl von U-förmigen Haltern (3) parallel angeordnet und am Gehäuse angebracht sind, jedoch abwechselnd in entgegengesetzte Richtungen ausgerichtet sind,
- jede Platte auf einem U-förmigen Halter (3) aufgelagert und daran befestigt ist und jeweils kürzer als das Gehäuse (3) ist, wodurch ein Spalt entsteht, durch den das Wärmeträgerfluid fließt;
- aufeinanderfolgende Platten versetzt zueinander angeordnet sind, wodurch der genannte Wärmeträgerfluidkreis (5) in Form einer Spule ohne Abzweig entsteht.

2. Thermische Energiespeichereinheit auf Basis von Fest-Flüssig-Phasenwechsel-Materialien nach Anspruch 1, **dadurch gekennzeichnet, dass** das quaderförmige Gehäuse (2) zur leichteren Installation von Haltern und den mit einem Fest-Flüssig-Phasenwechselmaterial gefüllten Platten zwei Teile umfasst.

3. Thermische Energiespeichereinheit auf Basis von Fest-Flüssig-Phasenwechsel-Materialien nach Anspruch 1, **dadurch gekennzeichnet, dass** die U-förmigen Halter (3) aus einem "L"-förmigen Profil gefertigt sind.

4. Thermische Energiespeichereinheit auf Basis von Fest-Flüssig-Phasenwechsel-Materialien nach Anspruch 1, **dadurch gekennzeichnet, dass** die mit einem Fest-Flüssig-Phasenwechsel-Material (4) gefüllte Platte aus einem wärmeleitenden Material besteht.

5. Thermische Energiespeichereinheit auf Basis von Fest-Flüssig-Phasenwechsel-Materialien nach Anspruch 1, **dadurch gekennzeichnet, dass** der Raum (5), durch den das Wärmeträgerfluid strömt, einen rechteckigen Querschnitt aufweist.

6. Thermische Energiespeichereinheit auf Basis von Fest-Flüssig-Phasenwechsel-Materialien nach Anspruch 1, **dadurch gekennzeichnet, dass** der Verteiler (6) des Wärmeträgerfluids als Tank mit Löchern geformt ist, die so bemessen sind, dass eine geeignete Verteilung gewährleistet ist.

7. Thermische Energiespeichereinheit auf Basis von Fest-Flüssig-Phasenwechsel-Materialien nach Anspruch 1, **dadurch gekennzeichnet, dass** die Zirkulation des Wärmeträgerfluids in die Speichervorrichtung (1) durch einen aus geraden oder wellenförmigen Kanälen gebildeten Kreislauf (5) auf Form und Oberfläche beruht, durch die die Platten mit dem eingeschlossenen Phasenwechselmaterial (4), (7) und (8) gekennzeichnet sind.

## Revendications

1. Unité de stockage d'énergie thermique basée sur des matériaux à changement de phase solide-liquide, l'unité utilisant un matériau de changement de phase solide-liquide et ou moins, de préférence, un fluide caloporteur liquide pour l'énergie thermique stockée à transporter et réutiliser dans d'autres processus, comportant :
- un boîtier parallélépipède (2) ;
- un matériau à changement de phase solide-liquide encapsulé dans des plaques, ces plaques étant aménagées à l'intérieur de ce boîtier (2) déterminant un circuit de fluide caloporteur (5) ;
- au moins deux collecteurs (6) reliés au boîtier (2) qui assurent la distribution appropriée du fluide caloporteur ;
**caractérisée en ce que**
- une pluralité de poignées en forme de U (3) sont aménagées parallèles et fixées au boîtier, mais alternativement pointant dans des sens opposés.
- chaque plaque est supportée et fixée sur une poignée en forme de U (3) et est plus courte que le boîtier (2) en laissant un écart à travers lequel coule le fluide caloporteur ;
- des plaques successives sont mal alignées en générant ce circuit de fluide caloporteur (5) en forme d'un rouleau sans embranchements.

2. L'unité de stockage d'énergie thermique basée sur des matériaux à changement de phase solide-liquide conformément à la revendication 1, **caractérisée en ce que** le boîtier parallélépipède (2) comporte deux parties afin de faciliter l'installation de poignées et des plaques remplies d'un matériau à changement de phase solide-liquide.

3. L'unité de stockage d'énergie thermique basée sur des matériaux à changement de phase solide-liquide conformément à la revendication 1, **caractérisée en ce que** les poignées en forme de U (3) sont construites à partir d'un profil en forme de L.

4. L'unité de stockage d'énergie thermique basée sur des matériaux à changement de phase solide-liquide conformément à la revendication 1, **caractérisée en ce que** la plaque, remplie d'un matériau à changement de phase solide-liquide (4), est faite en un matériau conducteur thermique.

5. L'unité de stockage d'énergie thermique basée sur des matériaux à changement de phase solide-liquide conformément à la revendication 1, **caractérisée en ce que** l'espace (5) le long duquel le fluide caloporteur coule possède une section rectangulaire.

6. L'unité de stockage d'énergie thermique basée sur des matériaux à changement de phase solide-liquide conformément à la revendication 1, **caractérisée en ce que** le collecteur (6) du fluide caloporteur a la forme d'un réservoir ayant des trous d'une taille qui assure la distribution appropriée.

7. L'unité de stockage d'énergie thermique basée sur des matériaux à changement de phase solide-liquide conformément à la revendication 1, **caractérisée en ce que** la circulation du fluide caloporteur dans le dispositif de stockage (1) à travers un circuit (5) qui est formé par des rigoles droites ou ondulées est basée sur la forme et la surface qui caractérisent les plaques avec du PCM encapsulé (4), (7) et (8).
